# EUROPEAN PATENT APPLICATION

(11) **EP 4 848 530 A1**
(43) Date of publication of application: **02.12.2026**
(21) Application number: 26176861.8
(22) Date of filing: 06.05.2026
(51) Int. Cl.: H02J 7/70, H02H 5/08, H02J 7/60, H02J 7/62

(54) **LIQUID DETECTION FOR A USER COMPUTING DEVICE CHARGING SYSTEM**

(30) Priority: 27.05.2025 US 202519219471
(71) Applicant: Google LLC, Mountain View, CA 94043 (US)
(72) Inventor: Wu, Jianfeng, Shanghai, 200120 (CN); Vu, My, Mountain View, 94043 (US); Liu, Xingyong, Shanghai, 200120 (CN); Chen, Yongjun Andrew, Shenzhen, 518033 (CN); Kang, Yu Chuan, 220 New Taipei City (TW); Yi, Guanghui, Shanghai, 200120 (CN); Corbridge, Mark, Mountain View, 94043 (US); Congdon, Thomas James, Mountain View, 94043 (US)
(74) Representative: Maikowski & Ninnemann Patentanwälte Partnerschaft mbB

(57) **Abstract**

A charging system includes a user computing device having a rechargeable battery and a conductive element electrically connected to the rechargeable battery. The charging system also includes a charging device. The charging device includes a conductive area having a first portion electrically connected to a power supply and a second portion electrically grounded. The first portion is configured to contact the conductive element. The charging device also includes at least one processor configured to perform one or more operations. The one or more operations including detecting a presence of or an absence of a conductive liquid in contact with the first and second portions of the conductive area, wherein the presence of conductive liquid creates a short circuit between the first and second portions.

## Description

### FIELD OF THE INVENTION

The present disclosure relates generally to charging systems for user computing devices, and more particularly, to a charging system for a wearable computing device configured to detect liquid in contact with a conductive area of a related charging device.

### BACKGROUND

User computing devices may have rechargeable batteries for powering various components of the user computing devices. As such, the user computing devices typically include a charging interface for charging such rechargeable batteries. Current solutions can either be inductive charging solutions or wired charging solutions. In wired charging solutions, electrical contacts of the user computing device come into contact with electrical contacts of a charging device, which provides electrical charge to the user computing device (among other functionality, such as providing contacts for other electrical sensor components).

Since the user computing devices are frequently handled and/or worn by users, the electrical contacts of the user computing devices and/or the charging device can be exposed to conductive liquids, such as sweat. The conductive liquids can create a conductive pathway between the electrical contacts and surrounding components of the user computing devices and/or related charging devices. As such, the user computing devices may be prevented from properly charging or charging at all. Further, the conductive pathway can increase the incidence of electrolytic corrosion of the surrounding components, which can lead to reduced performance of the user computing device and/or the relative charging devices.

Accordingly, the present disclosure is directed to systems and methods for detecting liquid in contact with a conductive area of a charging device for a user computing device.

### SUMMARY OF THE INVENTION

Aspects and advantages of embodiments of the present disclosure will be set forth in part in the following description, or can be learned from the description, or can be learned through practice of the embodiments.

In an aspect, the present disclosure is directed to a charging system. The charging system includes a user computing device having a rechargeable battery and a conductive element electrically connected to the rechargeable battery. The charging system also includes a charging device. The charging device includes a conductive area having a first portion electrically connected to a power supply and a second portion electrically grounded. The first portion is configured to contact the conductive element. The charging device also includes at least one processor configured to perform one or more operations. The one or more operations including detecting a presence of or an absence of a conductive liquid in contact with the first and second portions of the conductive area, wherein the presence of conductive liquid creates a short circuit between the first and second portions.

In another aspect, the present disclosure is directed to a charging device for conductive charging of a rechargeable battery of a user computing device. The user computing device having a conductive element electrically connected to the rechargeable battery. The charging device includes a conductive area comprising a first portion electrically connected to a power supply and a second portion electrically grounded. The first portion is configured to contact the conductive element. The charging device also includes at least one processor configured to perform one or more operations. The one or more operations including detecting a presence of or an absence of a conductive liquid in contact with the first and second portions of the conductive area, wherein the presence of conductive liquid creates a short circuit between the first and second portions.

In yet another aspect, the present disclosure is directed to a computer-implemented method for controlling a charging system having a user computing device and a charging device. The charging device having a conductive area including a first portion electrically connected to a power supply and a second portion electrically grounded. The method includes detecting a presence or an absence of a conductive liquid in contact with the first and second portions of the conductive area of the charging device, wherein the presence of conductive liquid creates a short circuit between the first and second portions. The method also includes, in response to detecting the absence of the conductive liquid, transferring power from the power supply to a conductive element of the user computing device when the conductive element is in contact with the first portion of the conductive area. In addition, the method includes, in response to detecting the presence of the conductive liquid, preventing the power from being transferred from the power supply to the conductive element when the conductive element is in contact with the first portion of the conductive area.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1A illustrates a block diagram of a charging system (e.g., including a user computing device and a charging device) according to one or more exemplary embodiments of the present disclosure;
FIG. 1B illustrates a schematic perspective view of a charging system according to one or more exemplary embodiments of the present disclosure;
FIG. 2 illustrates a perspective view of an embodiment of one or more conductive elements of a user computing device according to one or more exemplary embodiments of the present disclosure;
FIG. 3 illustrates a top down view of a charging device including one or more conductive areas according to one or more exemplary embodiments of the present disclosure;
FIG. 4 illustrates a partial cross-sectional view of the charging device of FIG. 3 with a user computing device positioned thereon according to one or more exemplary embodiments of the present disclosure;
FIG. 5 illustrates a perspective view of a conductive area having a first portion, a second portion, and a partition therebetween according to one or more exemplary embodiments of the present disclosure; and
FIG. 6 illustrates a flow diagram of an embodiment of a method for controlling the charging device according to the present disclosure.

Repeat use of reference characters in the present specification and drawings is intended to represent the same or analogous features or elements of the present technology.

### DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope or spirit of the present disclosure. For instance, features illustrated or described as part of one embodiment can be used with another embodiment to yield a still further embodiment. Thus, it is intended that aspects of the present disclosure cover such modifications and variations.

Repeated use of reference characters and/or numerals in the present specification and/or figures is intended to represent the same or analogous features, elements, or operations of the present disclosure. Repeated description of reference characters and/or numerals that are repeated in the present specification is omitted for brevity.

As referred to herein, the terms "includes" and "including" are intended to be inclusive in a manner similar to the term "comprising." As referenced herein, the terms "or" and "and/or" are generally intended to be inclusive, that is "A or B" or "A and/or B" are each intended to mean "A or B or both." As referred to herein, the terms "first," "second," "third," and so on, can be used interchangeably to distinguish one component or entity from another and are not intended to signify location, functionality, or importance of the individual components or entities. As referenced herein, the terms "couple," "couples," "coupled," and/or "coupling" refer to chemical coupling (e.g., chemical bonding), communicative coupling, electrical and/or electromagnetic coupling (e.g., capacitive coupling, inductive coupling, direct and/or connected coupling, etc.), mechanical coupling, operative coupling, optical coupling, and/or physical coupling.

As referenced herein, the term "system" can refer to hardware (e.g., application specific hardware), computer logic that executes on a general-purpose processor (e.g., a central processing unit (CPU)), and/or some combination thereof. In some embodiments, a "system" described herein can be implemented in hardware, application specific circuits, firmware, and/or software controlling a general-purpose processor. In some embodiments, a "system" described herein can be implemented as program code files stored on a storage device, loaded into a memory, and executed by a processor, and/or can be provided from computer program products, for example, computer-executable instructions that are stored in a tangible computer-readable storage medium (e.g., random-access memory (RAM), hard disk, optical media, magnetic media).

### Overview

User computing devices, such as smart watches, earbuds, smart glasses, etc., can include one or more conductive elements configured to interface with one or more conductive areas on a charging device for charging a rechargeable battery of the user computing device. However, the conductive element(s) and/or the conductive area(s) may be exposed to conductive liquids, such as sweat, that can create conductive pathways to surrounding components, such as a housing of the user computing device. As such, the conductive pathway may direct power away from the conductive elements of the user computing device such that charging operations are hindered or prevented. Further, the surrounding components can be subjected to electrolytic corrosion introduced via the conductive pathway, which can damage the surrounding components.

Motivated by preventing the potential exposure of conductive liquids to conductive element(s) for a user computing device and/or the conductive area(s) for a related charging device, the present disclosure is directed to systems and methods for detecting liquid in contact with a conductive area of a charging device for a user computing device. Thus, in an embodiment, the conductive area of the charging device can include a first portion electrically coupled to a power supply and a second portion electrically grounded. In particular, the transfer of power from the power supply to a conductive element of the user computing device in contact with the first portion can be prevented when a conductive liquid is detected on the second portion of the conductive area. Preventing the transfer of power from the power supply to the conductive element of the user computing device when the conductive liquid is detected on the second portion of the conductive area can reduce a likelihood of a conductive pathway being created by the conductive liquid to the surrounding components, which can, in turn, reduce a likelihood that the charging operations will be hindered by the conductive pathway and a likelihood of the surrounding components being damaged by electrolytic corrosion.

One or more features may be provided to facilitate biasing the conductive liquid into contact with the second portion. In embodiments, for example, the conductive element of the user computing device may include a hydrophobic coating. In additional or alternative embodiments, the conductive area of the charging device may include a hydrophilic coating. Further, the conductive area may include a partition arranged between the first portion and the second portion. In particular the partition may extend from the first portion to the second portion. Moreover, the partition may be formed of an insulating material so as to electrically isolate the first portion and the second portion. As such, the hydrophilic and/or hydrophobic coatings may cause the conductive liquid present on the conductive element and/or the conductive area to bridge across the partition so as to contact the second portion of the conductive area. As such, the conductive liquid may create a short circuit between the first portion and the second portion. Hence, the conductive liquid can be detected based on a presence of the short circuit.

In some instances, the charging device may be further configured to enable a low-voltage mode when the conductive liquid is detected on the second portion of the conductive area. In the low-voltage mode, the charging device can provide a minimum voltage to detect the presence or the absence of the conductive liquid on the second portion of the conductive area. The minimum voltage may be configured to provide only sufficient voltage to detect the presence or the absence of the conductive liquid on the second portion of the conductive area so as to minimize possible electrolytic corrosion resulting from the continued presence of the conductive liquid on the second portion of the conductive area.

Example aspects of the present disclosure provide several technical effects, benefits, and/or improvements in computing technology.

### Example Devices and Systems

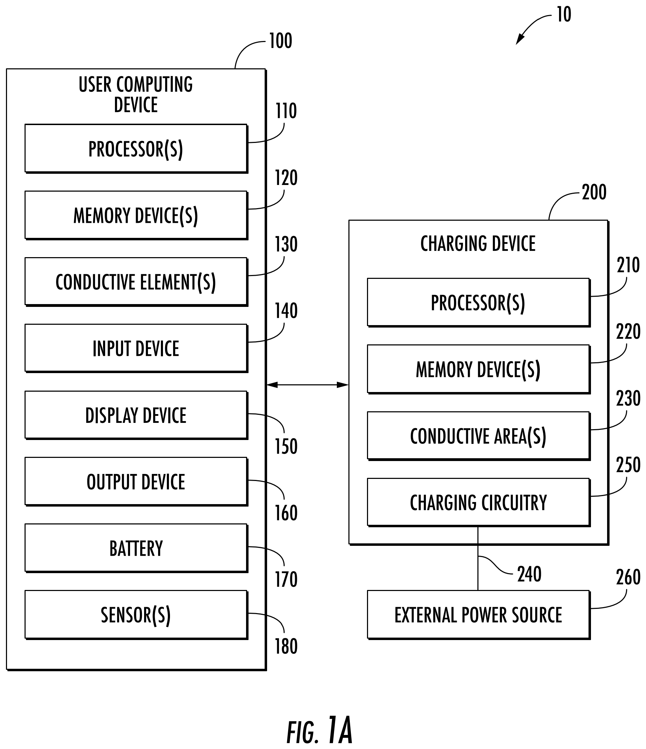

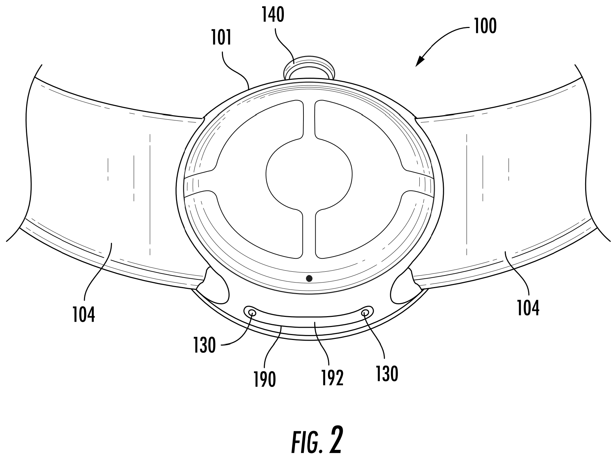

Referring now to the drawings, as shown particularly in FIG. 1A, a block diagram of a charging system 10 that includes a user computing device 100 and a charging device 200 is illustrated according the present disclosure. The user computing device 100 may include, for example, a wearable computing device (see FIG. 2). The wearable computing device can include a smart band, a smart watch, a smart patch, smart clothing, fitness tracker, earbuds, smart glasses and the like. Although certain embodiments are disclosed herein in the context of wearable devices, it should be appreciated that the present disclosure is not so limiting. For example, it should be understood that the features disclosed herein can be implemented using any suitable type of computing device or combination of computing devices such as, for example, a client computing device, a laptop, a tablet, the wearable computing device, a mobile computing device, such as a smartphone, and/or another computing device, whether wearable or not, which can include a battery that is chargeable by a charging device according to the methods described herein.

Still referring to FIG. 1A, the user computing device 100 may include one or more processors 110, one or more memory devices 120, one or more conductive elements 130 (as will be described in more detail below), an input device 140, a display device 150, an output device 160, a battery 170, and one or more sensors 180. One or more of the components of the user computing device 100 may be operatively connected with one another via a system bus. In some embodiments, the user computing device 100 may include fewer or more components than that shown in FIG. 1A. For example, the user computing device 100 may not include the display device 150. Furthermore, the system bus may be any of several types of bus structures that may further interconnect to a memory bus (with or without a memory controller), a peripheral bus, and/or a local bus using any of a variety of commercially available bus architectures.

In embodiments, the conductive element(s) 130 is configured to be electrically connected to the battery 170. In particular, the conductive element(s) 130 can transfer power from the charging device 200 to the battery 170 to recharge the battery 170. As such, the user computing device 100 may include any suitable elements (e.g., wires, circuits, power converter(s), and/or the like) for transferring power from the conductive element(s) 130 to the battery 170 when power is supplied to the conductive element(s) 130. It should be appreciated that user computing devices of different dimensions (e.g., case diameters, curvatures, etc.) may have the same positioning of the conductive element(s) 130 so that they may be accommodated on the same charging device 200.

In embodiments, the input device 140 may be configured to receive an input from a user and may include, for example, one or more of a keyboard (e.g., a physical keyboard, virtual keyboard, etc.), a mouse, a joystick, a button, a switch, an electronic pen or stylus, a gesture recognition sensor (e.g., to recognize gestures of a user including movements of a body part), an input sound device or voice recognition sensor (e.g., a microphone to receive a voice command), a track ball, a remote controller, a portable (e.g., a cellular or smart) phone, and so on. The input device 140 may also be embodied by a touch-sensitive device or a touch-sensitive display device having a touchscreen capability. For example, the input device 140 may be used by a user of the user computing device 100 to provide an input to control a process of the charging operation of the user computing device 100. For example, the input may be a voice input, a touch input, a gesture input, a click via a mouse or remote controller, and so on.

Moreover, the display device 150 may be configured to present information viewable by the user, for example on a user interface (e.g., a graphical user interface). The display device 150 may include any type of electronic display or screen known in the art. For example, in some embodiments, the display device 150 may be a non-touch sensitive display. In other embodiments, the display device 150 may include a touchscreen such as, for instance, a capacitive touchscreen. For example, in these embodiments, the display device 150 may include a surface capacitive touchscreen or a projective capacitive touch screen that can be configured to respond to contact with electrical charge-holding members or tools, such as a human finger.

Further, the display device 150 can be configured to provide brightness, contrast, and/or color saturation features according to display settings that can be maintained by control circuitry and/or other internal components and/or circuitry of the user computing device 100. In some embodiments, the display device 150 can be configured to provide (e.g., render) a variety of information to a user wearing the user computing device 100. For example, the display device 150 may be configured to provide a visual representation of a status of a charging operation, to provide an indication regarding whether the user computing device 100 is correctly coupled to the charging device 200, to provide information regarding a biometric measurement, etc.

The display device 150 may include a liquid crystal display (LCD), a light emitting diode (LED) display, an organic light emitting diode (OLED) display, active matrix organic light emitting diode (AMOLED), flexible display, 3D display, a plasma display panel (PDP), a cathode ray tube (CRT) display, and the like, for example. However, the disclosure is not limited to these example display devices and may include other types of display devices. While the user computing device 100 is shown in example embodiments of the present disclosure to have the display device 150, it should be understood that, in some embodiments, the user computing device 100 does not have any type of display unit.

The output device 160 may be configured to provide an output to the user and may include, for example, one or more of an audio device (e.g., one or more speakers), a haptic device to provide haptic feedback to a user, a light source (e.g., one or more light sources such as LEDs which provide visual feedback to a user), the display device 150, and the like. For example, in some embodiments of the disclosure, the user may be provided with an output (e.g., via one or more of the speaker, haptic device, light source, display device, etc.) indicating a status of a charging operation, a status of the battery, etc.

Furthermore, the sensor(s) 180 may include an inertial measurement unit which includes one or more accelerometers and/or one or more gyroscopes. The one or more accelerometers may be used to capture motion information with respect to the user computing device 100. The one or more gyroscopes may also be used additionally or alternatively to capture motion information with respect to the user computing device 100. For example, the inertial measurement unit may be configured as a six-axis or six-dimensional inertial measurement unit (e.g., a tri-axial accelerometer and a tri-axial gyroscope). In still further embodiments, the sensor(s) 180 may include any suitable sensor, such as a magnetometer, barometers, a heart rate sensor, an imaging sensor, a photoplethysmography (PPG) sensor, and/or any other suitable sensor.

Still referring to FIG. 1A, the charging device 200 may also include one or more processors 210, one or more memory devices 220, one or more conductive areas 230 (as will be described in more detail below), a charging cable 240, and charging circuitry 250. The charging cable 240 (e.g., a USB charging cable, for example, a USB type-C charging cable) may be connectable at one end to a device having a charging port (e.g., a charging adapter, a wall charger, charging station etc.), and connected at another end to the charging circuitry 250. The device having the charging port may be, for example, electrically to an external power source 260, such as an electrical grid, an external battery, etc. As such, in an embodiment, the charging cable 240 can receive power from the external power source 260 (e.g., via the device having the charging port) so that power can then be provided to the user computing device 100 via the charging circuitry 250.

The charging circuitry 250 may be electrically connected to the conductive area(s) 230. The charging circuitry 250 is configured to supply power from a power supply (e.g., the external power source 260, an internal power source (not shown), or both) to the battery 170 via the conductive area(s) 230 and the conductive element(s) 130 when each of the conductive element(s) 130 is in contact with a respective one of the conductive area(s) 230. As such, the charging circuitry 250 may include any suitable elements (e.g., wires, circuits, power converter(s), and/or the like) for supplying power from a power supply to the conductive area(s) 230.

One or more of the features of the charging device 200 may be operatively connected with one another via a system bus. For example, the system bus may be any of several types of bus structures that may further interconnect to a memory bus (with or without a memory controller), a peripheral bus, and/or a local bus using any of a variety of commercially available bus architectures.

The processors 110, 210 described herein can be any suitable processing device that can be included in a user computing device 100 or the charging device 200. For example, the processor(s) 110, 210 may include processor cores, a controller and an arithmetic logic unit, a central processing unit (CPU), a graphics processing unit (GPU), a digital signal processor (DSP), an image processor, a microcomputer, a field programmable array, a programmable logic unit, an application-specific integrated circuit (ASIC), a microprocessor, a microcontroller, etc., and/or combinations thereof, including any other device capable of responding to and executing instructions in a defined manner. Moreover, in an embodiment, the processor(s) 110, 210 can be a single processor or a plurality of processors that are operatively connected, for example in parallel.

The memory devices 120, 220 can include one or more non-transitory computer-readable storage mediums, such as such as a Read Only Memory (ROM), Programmable Read Only Memory (PROM), Erasable Programmable Read Only Memory (EPROM), and flash memory, a USB drive, a volatile memory device such as a Random Access Memory (RAM), an internal or external hard disk drive (HDD), floppy disks, a Bluray disk, or optical media such as CD ROM discs and DVDs, and combinations thereof. However, examples of the memory devices 120, 220 are not limited to the above description, and the memory devices 120, 220 may be realized by other various devices and structures as would be understood by those skilled in the art.

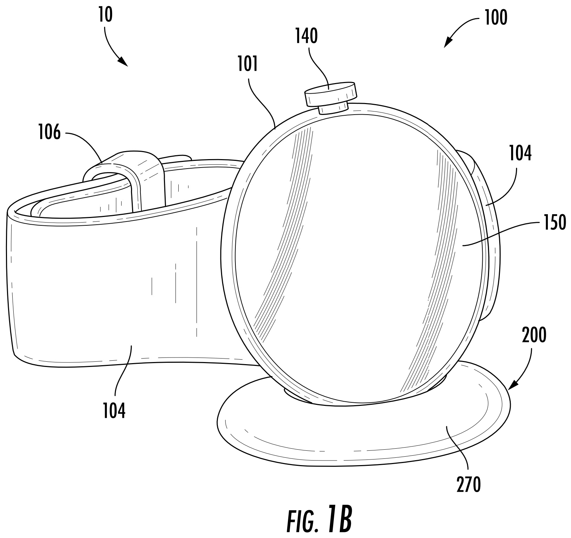

Referring now to FIG. 1B, a perspective view of the charging system 10 including the user computing device 100 and the charging device 200 is illustrated. In example embodiments, as shown, the user computing device 100 may be configured to rest on the charging device 200 such that a charging interface is established between a side surface on the user computing device 100 and the charging device 200 for charging the battery 170 of the user computing device 100. The charging interface between the user computing device 100 and the charging device 200 may be configured to allow conductive charging. Although certain embodiments are disclosed herein in the context of the charging interface being established between the side surface of the user computing device 100 and the charging device 200, it should be appreciated that the present disclosure is not so limiting. For example, it should be understood that the features disclosed herein can be implemented with the charging interface being established between any suitable surface of the user computing device 100, such as a rear surface, a side surface, a bottom surface, etc., and the charging device 200.

In example embodiments, the user computing device 100 may further include a housing 101, an attachment component 104, and a securement component 106, as shown in FIG. 1B. In an embodiment, two sides of the housing 101 can be coupled (e.g., mechanically, operatively) to the attachment component 104. In some embodiments, the securement component 106 can be located on, coupled to (e.g., mechanically, operatively), and/or integrated with the attachment component 104. In these or other embodiments, the securement component 106 can be positioned opposite the housing 101 on an opposing end of the attachment component 104.

The attachment component 104 can be used to attach (e.g., affix, fasten) the user computing device 100 to a user (not shown) thereof (e.g., to the user's body or clothing). In some embodiments, the attachment component 104 can take the form of, for example, a strap, an elastic band, a rope, and/or any other form of attachment one of ordinary skill in the art would understand can be used to attach the user computing device 100 to a user. For example, the user computing device 100 can be configured as a wrist bracelet, watch, ring, electrode, finger-clip, toe-clip, chest-strap, ankle strap, and/or a device placed in a pocket. In additional or alternative embodiments, the user computing device 100 can be embedded in something in contact with the user such as, for instance, clothing, a mat that can be positioned under the user, a blanket, a pillow, and/or another accessory.

Still referring to FIG. 1B, the charging device 200 may include a charging housing 270, as shown. The charging housing 270 may house components of the charging device 200. Further, in some embodiments, as shown, the charging housing 270 may be configured to receive at least a portion of the user computing device 100 when in contact with the charging device for recharging the battery 170. In other embodiments, the charging housing 270 may be configured such that the user computing device 100 rests atop the charging housing 270 when in contact with the charging device for recharging the battery 170.

Referring generally to FIGS. 2-4, the charging system 10 includes the same number of conductive areas 230 as the conductive elements 130. In particular, each conductive area 230 is configured to be contacted by one respective conductive element 130 during a charging operation. For instance, as shown, the user computing device 100 includes two conductive elements 130, and the charging device 200 includes two conductive areas 230 each contacted by one respective conductive element 130. It should be understood that the charging system 10 can include any suitable number of conductive elements 130 and related conductive areas 230.

The conductive element(s) 130 and the conductive area(s) 230 are both formed of conductive material(s). In some embodiments, the conductive element(s) 130 is formed of a first material and the conductive area(s) 230 is formed of a second material, where the first material has a higher hardness value than the second material. For example, the first material includes stainless steel, whereas the second material includes copper (e.g., brass, phosphor bronze, and/or the like). As such, the conductive element(s) 130 is less likely to be scratched than the conductive area(s) 230. Moreover, the first material for the conductive element(s) 130 may have a higher hardness value than the material for at least the housing 101 of the user computing device 100.

Referring particularly to FIG. 2, a perspective view of the conductive element(s) 130 of the user computing device 100 is illustrated. The conductive element(s) 130 may be supported at the housing 101. In some embodiments, the conductive element(s) 130 may be positioned on, or extend at least partially through, a side surface of the housing 101, as shown. In such embodiments, the conductive element(s) 130 of the user computing device 100 are generally circumferentially spaced apart from the attachment component 104 such that the conductive element(s) 130 of the user computing device 100 may rest on the charging device 200 without having to remove the attachment component 104 (see FIG. 1B). Further, the conductive element(s) 130 of the user computing device 100 may be positioned at the side surface of the user computing device 100 such that the conductive element(s) 130 may easily come into direct contact with the conductive area(s) 230 of the charging device 200. For instance, the conductive element(s) 130 may extend flush with or extend outwardly from the side surface of the user computing device 100.

In other embodiments, the conductive element(s) 130 may be positioned on, or extend at least partially through, a rear surface of the housing 101 such that the conductive element(s) 130 may easily come into direct contact with the conductive area(s) 230 of the charging device 200 (e.g., without having to remove the attachment component 104). For instance, the conductive element(s) 130 may extend flush with or extend outwardly from the rear surface of the user computing device 100.

Moreover, in embodiments, the conductive element(s) 130 may include a coating formed of a hydrophobic material. Providing the hydrophobic coating on the conductive element(s) 130 can reduce a likelihood of a conductive liquid present on the conductive element(s) 130 from dispersing onto surrounding components, such as the housing 101, of the user computing device 100.

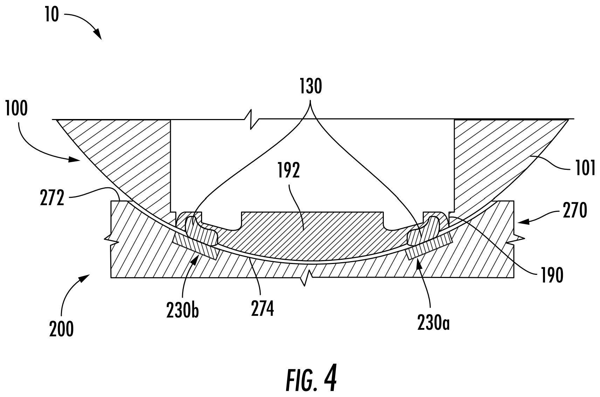

In embodiments, as shown in FIG. 2, the housing 101 may define at least one opening 190, where an insert 192 is received in each respective opening 190, and fixed relative to the housing 101, where the conductive element(s) 130 may be retained in a fixed position within the insert(s) 192. In some embodiments, as shown, only one insert 192 may be provided, such that the conductive element(s) 130 is received in the same insert 192. However, in other embodiments, multiple inserts 192 may be provided, where the conductive element(s) 130 may be distributed across the multiple inserts 192. In embodiments, the conductive element 130 may extend at least partially outwardly from the housing 101 when received in the insert(s) 192, as shown in FIG. 4. Moreover, it should be appreciated that, in some embodiments, the conductive element(s) 130 may be directly supported at the housing 101 without the insert(s) 192.

Further, the insert(s) 192 may be made of an insulating material to electrically isolate the conductive element(s) 130 from the housing 101, particularly when the housing 101 is made of a conductive material. In one or more instances, a water-tight seal may be formed between the conductive element(s) 130 and the insert(s) 192 and between the insert(s) 192 and the housing 101.

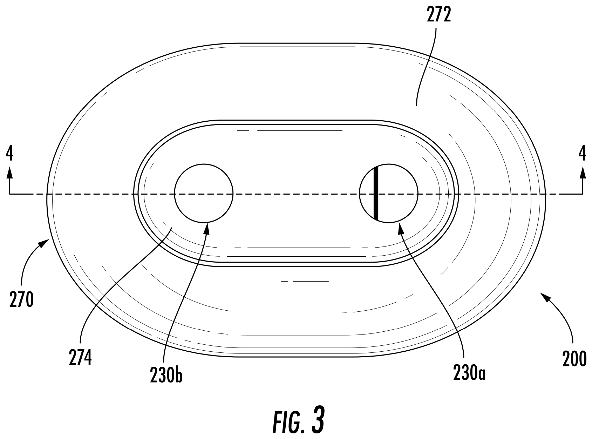

Referring now to FIG. 3, a top view of an embodiment of the charging device 200 is illustrated. As shown, the charging housing 270 of the charging device 200 may have a main surface 272 and a recessed surface 274 recessed at least partially from the main surface 272. In some embodiments, the main surface 272 may at least partially circumferentially surround the recessed surface 274. For instance, as shown, the main surface 272 may fully encircle the recessed surface 274.

Further, the conductive area(s) 230 of the charging device 200 may be supported on the recessed surface 274. In embodiments, the conductive area(s) 230 may similarly be positioned on the charging device 200 such that the conductive area(s) 230 may easily come into direct contact with the conductive element(s) 130 on the user computing device 100. For instance, the conductive area(s) 230 may extend flush with the recessed surface 274 or be recessed below the recessed surface 274 of the charging housing 270.

Moreover, the conductive area(s) 230 may include a positive conductive area 230a and a negative conductive area 230b. The positive conductive area 230a may be electrically connected to the power supply (e.g., via the charging circuitry 250, as mentioned above). The negative conductive area 230b may be electrically grounded. As such, the charging operation can commence when respective conductive element(s) 130 contact the positive conductive area 230a and the negative conductive area 230b.

Referring now to FIG. 4, a partial cross-sectional view of the charging device 200 with the user computing device 100 positioned thereon is illustrated. The recessed surface 274 may be configured such that at least a portion of the user computing device 100 including the conductive element(s) 130 is receivable within a recessed volume defined by the recessed surface 274. In particular, the side surface of the user computing device 100 may be received with the recessed volume, as shown. The side surface of the housing 101 may be spaced apart from the recessed surface 274 when the conductive element(s) 130 contacts the conductive areas 230a, 230b, as shown. As such, wear on the housing 101 by contact with the charging device 200 may be reduced or eliminated.

In some embodiments, the material of the conductive area(s) 230 has a higher hardness value than the material of at least the recessed surface 274 of the charging housing 270. For instance, the charging housing material may be, for example, a thermoplastic such as polycarbonate. The recessed surface 274 may also be configured to accommodate differently sized user computing devices and/or any other computing device having a different housing profile, but the same conductive element(s) 130 positioning as the user computing device 100. While the charging housing 270 is shown in example embodiments of the present disclosure to have the recessed surface 274, it should be understood that, in some embodiments, the charging housing 270 does not have the recessed surface 274.

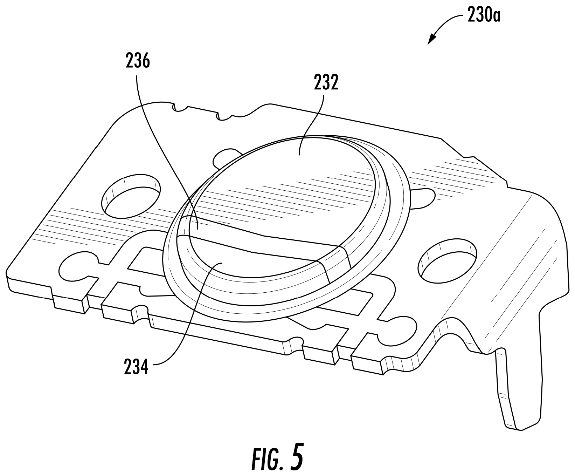

Referring now to FIG. 5, a perspective view of an embodiment of the conductive area(s) 230 according to the present disclosure is illustrated. In particular, the conductive area may be configured to facilitate detection of a presence of or an absence of a conductive liquid thereon. Furthermore, as shown, the conductive area(s) 230 may correspond to the first conductive area 230a and may include a first portion 232 and a second portion 234. The first portion 232 is electrically coupled to the power supply (e.g., via the charging circuitry 250; FIG. 1A). As such, the first portion 232 can transfer power to the user computing device 100 when in contact with corresponding conductive element 130 of the user computing device 100. The second portion 234 is electrically grounded. As such, a short circuit is created when the second portion 234 is electrically connected to the first portion 232 (e.g., via the presence of the conductive liquid contacting first and second portions 232, 234).

Further, the first conductive area 230a includes a partition 236 configured to electrically isolate the first portion 232 from the second portion 234. The partition 236 is arranged between the first portion 232 and the second portion 234. For instance, the partition 236 may extend from the first portion 232 to the second portion 234. Further, the partition 236 may be formed of an insulating material. The partition 236 may be further configured to minimize a distance between the second portion 234 and the first portion 232 while maintaining electrical isolation therebetween. Minimizing the distance while maintaining electrical isolation between the first and second portions 232, 234 can increase a likelihood of proper charging for the user computing device 100 by providing sufficient area of the first portion 232 to be contacted by the respective conductive element 130 of the user computing device 100. Further, such a configuration can increase a likelihood of a conductive liquid bridging across the partition 236 and electrically connecting the first and second portions 232, 234, which, in turn, creates the short circuit.

Moreover, in embodiments, the first portion 232 and the second portion 234 may each include a coating formed of a hydrophilic material. Providing the hydrophilic coating on the first and second portions 232, 234 may encourage the conductive liquid present on the first conductive area 230a to disperse across the surface of the first conductive area 230a, which further increases a likelihood of the conductive liquid bridging across the partition 236 and electrically connecting the first and second portions 232, 234.

### Example Methods

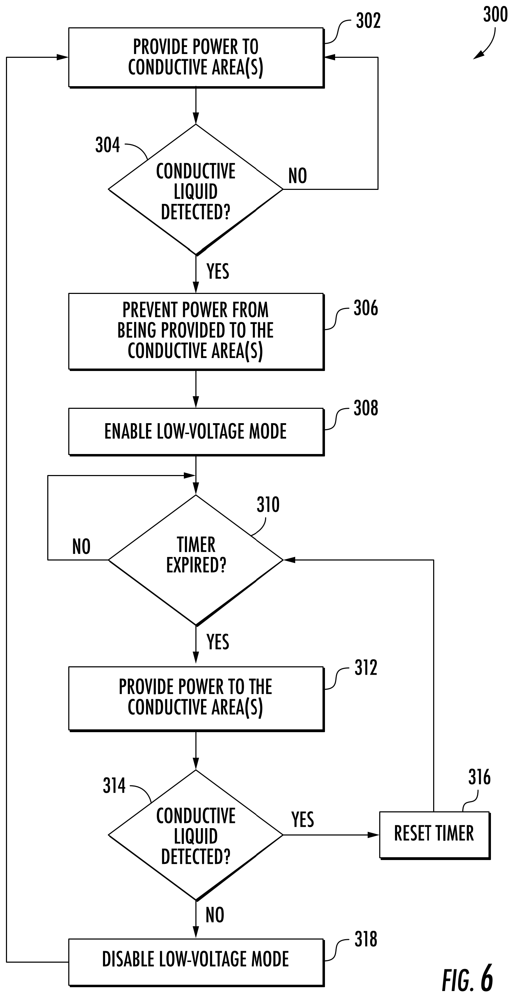

FIG. 6 illustrates a flow diagram of an example computer-implemented method 300 according to one or more example embodiments of the present disclosure. The computer-implemented method 300 can be implemented using, for instance, the charging device 200 described above with reference to the example embodiments depicted in FIGS. 1-5.

The example embodiment illustrated in FIG. 6 depicts operations performed in a particular order for purposes of illustration and discussion. Those of ordinary skill in the art, using the disclosures provided herein, will understand that various operations or steps of the computer-implemented method 300 or any of the other methods disclosed herein can be adapted, modified, rearranged, performed simultaneously, include operations not illustrated, and/or modified in various ways without deviating from the scope of the present disclosure.

As shown at (302), the computer-implemented method 300 may include providing (e.g., via the processor 210 operatively connected to the charging circuitry 250 of the charging device 200) power to the conductive area(s) 230. For instance, the processor 210 can be configured to draw power from the power supply (e.g., the external power source 260) and direct the power to the conductive area(s) 230 via the charging circuitry 250. As such, power can be transferred to the battery 170 of the user computing device 100 when the conductive element(s) 130 are in contact with the respective conductive area(s) 230.

As shown at (304), the computer-implemented method 300 may include determining (e.g., via the processor 210 operatively connected to the charging circuitry 250 of the charging device 200) whether a conductive liquid is detected on the conductive area(s) 230. For instance, the processor 210 can be configured to monitor (e.g., via one or more sensors) one or more electrical characteristic(s), such as resistance, impedance, voltage, current, etc., at the conductive area(s) 230. When the conductive liquid is absent from the conductive area(s) 230, the electrical characteristic(s) may have a respective measured value that falls within a range defined by corresponding maximum and minimum thresholds. When the conductive liquid is present on the conductive area(s) 230, the conductive liquid may bridge across the partition 236 of the first conductive area 230a such that the first portion 232 is electrically connected to the second portion 234. As such, a short circuit may be created between the first and second portions 232, 234. In such an example, the electrical characteristic(s) may have a respective measured value that is outside of the range defined by the corresponding maximum and minimum thresholds (e.g., due to the short circuit).

Accordingly, the processor 210 can be configured to detect the presence of or the absence of the conductive liquid based on the measured value(s) of the electrical characteristic(s) at the conductive area(s) 230. In particular, the processor 210 can be configured to detect the presence of the conductive liquid when the measured value(s) of the electrical characteristic(s) at the conductive area(s) 230 is outside of the range. Further, the processor 210 can be configured to detect the absence of the conductive liquid when the measured value(s) of the electrical characteristic(s) at the conductive area(s) 230 is within the range.

As shown at (306), the computer-implemented method 300 may include preventing (e.g., via the processor 210 operatively connected to the charging circuitry 250 of the charging device 200) power from being provided to the conductive area(s) 230 in response to detecting the presence of the conductive liquid on the conductive area(s) 230. For example, the processor 210 may be configured to interrupt the flow of power from the power supply to the conductive area(s) 230 by actuating a switch, breaker, or the like in the charging circuitry 250. As such, power cannot be transferred to the battery 170 of the user computing device 100 when the conductive element(s) 130 are in contact with the respective conductive area(s) 230. In such examples, the user computing device 100 may notify the user that the charging operation has been interrupted. Preventing power from being provided to the conductive area(s) 230 when the conductive liquid is present on the conductive area(s) 230 can stop power from being transferred to surrounding components (e.g., of the charging device 200 and/or the user computing device 100) in contact with the conductive liquid, which can, in turn, reduce a likelihood of the surrounding components being damaged by electrolytic corrosion.

As shown at (308), the computer-implemented method 300 may include enabling (e.g., via the processor 210 operatively connected to the charging circuitry 250 of the charging device 200) a low-voltage mode. The low-voltage mode may be configured to minimize a voltage provided to the conductive area(s) 230 for detecting the presence of or the absence of the conductive liquid in contact with the conductive area(s) 230. As such, in the low-voltage mode, the voltage applied to the conductive area(s) 230 may be reduced to a minimum voltage. The minimum voltage may be predetermined based on characteristics of the charging circuitry 250 and/or the processor 210 so as to provide a minimum power that is sufficient for detecting the presence of or absence of the conductive liquid on the conductive area(s) 230. Minimizing the voltage in this manner can reduce incidences of electrolytic corrosion that may result during subsequent conductive liquid detections when the conductive liquid remains on the conductive area(s) 230. The processor 210 may be configured to actuate one or more components of the charging circuitry 250 to achieve the minimum voltage while the low-voltage mode is enabled.

As shown at (310), the computer-implemented method 300 may include determining (e.g., via the processor 210 operatively connected to the charging circuitry 250 of the charging device 200) whether a timer has expired. For example, the processor 210 may be configured to initiate a timer in response to enabling the low-voltage mode. The timer may have a predetermined duration (e.g., stored in the memory device(s) 220 of the charging device 200). The predetermined duration may be determined empirically (e.g., based on testing and/or simulation data to determine an expected amount of time for a user to remove the conductive liquid from the charging device 200 in response to being notified of the interruption to the charging operation.

As shown at (312), the computer-implemented method 300 may include providing (e.g., via the processor 210 operatively connected to the charging circuitry 250 of the charging device 200) power to the conductive area(s) 230. For example, the processor 210 may be configured to initiate the flow of power from the power supply to the conductive area(s) 230 by actuating a switch, breaker, or the like in the charging circuitry 250. In particular, the processor 210 may be configured to provide the power based on the minimum voltage to the conductive area(s) 230.

As shown at (314), the computer-implemented method 300 may include determining (e.g., via the processor 210 operatively connected to the charging circuitry 250 of the charging device 200) whether the conducive liquid is detected on the conductive area(s) 230. The processor 210 can be configured to determine whether the conducive liquid remains present on the conductive area(s) 230 in the same manner as discussed above at (304) and therefore will not be repeated for brevity.

As shown at (316), the computer-implemented method 300 may include resetting (e.g., via the processor 210 operatively connected to the charging circuitry 250 of the charging device 200) the timer in response to determining that the conductive liquid remains present on the conductive area(s) 230. As such, the computer-implemented method 300 can return to (310) to provide the user additional time to remove the conductive liquid from the conductive area(s) 230.

As shown at (318), the computer-implemented method 300 may include disabling (e.g., via the processor 210 operatively connected to the charging circuitry 250 of the charging device 200) the low-voltage mode in response to determining that the conductive liquid has been removed from the conductive area(s) 230. For example, the processor 210 may be configured to actuate one or more components of the charging circuitry 250 to achieve a normal voltage when the low-voltage mode is disabled. As such, the computer-implemented method 300 can return to (302) to provide power to the battery 170 of the user computing device 100 when the conductive element(s) 130 are in contact with the respective conductive area(s) 230.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A charging device for conductive charging of a rechargeable battery of a user computing device, the user computing device having a conductive element electrically connected to the rechargeable battery, the charging device comprising:
a conductive area comprising a first portion electrically connected to a power supply and a second portion electrically grounded, the first portion configured to contact the conductive element; and
at least one processor configured to perform one or more operations, the one or more operations comprising detecting a presence of or an absence of a conductive liquid in contact with the first and second portions of the conductive area, wherein the presence of conductive liquid creates a short circuit between the first and second portions.

2. The charging device of claim 1, wherein the one or more operations further comprise, in response to detecting the absence of the conductive liquid in contact with the first and second portions of the conductive area, transferring power from the power supply to the rechargeable battery when the conductive element is in contact with the first portion of the conductive area.

3. The charging device of claim 1 or 2, wherein the one or more operations further comprise, in response to detecting the presence of the conductive liquid in contact with the first and second portions of the conductive area, preventing power from being transferred from the power supply to the rechargeable battery when the conductive element is in contact with the first portion of the conductive area.

4. The charging device of claim 3, wherein the one or more operations further comprise enabling a low-voltage mode, the low-voltage mode configured to minimize a voltage provided to the conductive area for detecting the presence or the absence of the conductive liquid in contact with the second portion of the conductive area.

5. The charging device of any one of the preceding claims, wherein the conductive area comprises a partition arranged between the first portion and the second portion, the partition being formed of an insulating material.

6. The charging device of claim 5, wherein the partition extends from the first portion to the second portion.

7. The charging device of any one of the preceding claims, wherein the conductive area comprises a hydrophilic coating.

8. The charging device of any one of the preceding claims, wherein the conductive element comprises a hydrophobic coating.

9. The charging device of any one of the preceding claims, wherein the user computing device is a wearable computing device and the charging device is configured for conductive charging of a rechargeable battery of the wearable computing device.

10. A charging system, comprising: a user computing device comprising a rechargeable battery and a conductive element electrically connected to the rechargeable battery; and
a charging device of any one of the preceding claims.

11. A computer-implemented method for controlling a charging system comprising a user computing device and a charging device, the charging device having a conductive area including a first portion electrically connected to a power supply and a second portion electrically grounded, the method comprising:
detecting a presence or an absence of a conductive liquid in contact with the first and second portions of the conductive area of the charging device, wherein the presence of conductive liquid creates a short circuit between the first and second portions;
in response to detecting the absence of the conductive liquid, transferring power from the power supply to a conductive element of the user computing device when the conductive element is in contact with the first portion of the conductive area; and
in response to detecting the presence of the conductive liquid, preventing the power from being transferred from the power supply to the conductive element when the conductive element is in contact with the first portion of the conductive area.

12. The computer-implemented method of claim 11, further comprising enabling a low-voltage mode in response to detecting the presence of the conductive liquid, the low-voltage mode configured to minimize a voltage provided to the conductive area for detecting the presence or the absence of the liquid in contact with the conductive area.

13. The computer-implemented method of claim 11 or 12, wherein the conductive area comprises a hydrophilic coating and/or the conductive element comprises a hydrophobic coating.

14. The computer-implemented method of any one of claims 11 to 13, wherein the conductive area comprises a partition arranged between the first portion and the second portion, the partition being formed of an insulating material.

15. The computer-implemented method of any one of claims 11 to 14, wherein the user computing device is a wearable computing device.
